# EUROPÄISCHE PATENTANMELDUNG

(11) **EP 1 219 409 A1**
(43) Veröffentlichungstag der Anmeldung: **03.07.2002**
(21) Anmeldenummer: 00128672.3
(22) Anmeldetag: 29.12.2000
(51) Int. Cl.: B32B 21/13, E04C 2/12, B27M 3/00

(54) **Verfahren zur Herstellung von dicken Platten oder Balken aus Holzbrettern**

(71) Anmelder: Schallenmüller, K.-H., 74360 Ilsfeld-Auenstein (DE)
(72) Erfinder: Schallenmüller, K.-H., 74360 Ilsfeld-Auenstein (DE)
(74) Vertreter: Bögl, Wolfgang, Dipl.-Ing.

(57) **Zusammenfassung**

Die Erfindung betrifft ein wirtschaftliches Verfahren zur Herstellung von dicken Platten oder Balken aus Holzbrettern. Aus den Holzbrettern werden großflächige Tafeln hergestellt . Die Oberflächen derselben werden mit einer wärmehärtbaren Kunstharzzusammensetzung beleimt . Die beleimten Tafeln werden in geringem Abstand in einer Presse gestapelt ; es werden heiße Gase in die Presse geleitet und das Tafelpaket gepreßt .

## Beschreibung

Die Erfindung betrifft ein Verfahren zur Herstellung von dicken Platten oder Balken aus Holzbrettern.

Bei der Vearbeitung von Holz bei der Herstellung von Massivmöbeln oder der Herstellung von Fertighäusern werden kostengünstige und maßhaltige Platten oder Balken benötigt.

So ist es beispielsweise bekannt , Platten aus gesägten Brettern , beispielsweise Schalungsplatten, durch Heißpressen in Mehretagenpressen herzustellen. Wegen der schlechten Wärmeleitfähigkeit von Holz und der geringen anwendbaren Preßtemparatur von nur 100 bis 120 Grad C sind mit dieser Methode nur Platten in geringen Dicken wirtschaftlich herstellbar.

Es ist auch bekannt, Platten oder Balken aus beleimten gestapelten Brettern entweder durch Hochfrequenzerhitzung der Leimfugen oder durch Verwendung von kalthärtenden Harzsystemen in entsprechender Zusammensetzung herzustellen. Beide Verfahren sin nur auf die Anwendung bei Spezialfällen beschränkt.

Bei der Anwendung der Hochfrequenzerhitzung darf sich im Bereich des Preßgutes und der Preßplatten kein Metall befinden, wodurch der Aufbau der Presse aufwendig und daher teuer ist. Außerdem ist der Wirkungsgrad eines Hochfrequenzgenerators gering Der Nachteil von Kalthärterzusammensetzungen liegt in der langen Preßzeit von mehreren Stunden.

Das Erfindung zugrunde liegende technische Problem besteht darin, ein wirtschaftliches Verfahren für die Herstellung von dicken Platten oder Balken aus Holzbrettern anzugeben.

Dieses technische Problem ist erfindungsgemäß durch ein Verfahren mit folgenden Merkmalen gelöst :
a) aus den Holzbrettern werden großflächigen Tafeln hergestellt,
b) die Oberflächen der Tafeln werden mit einer wärmehärtbaren Kunstharzzusammensetzung beleimt,
c) die beleimten Tafeln werden in geringem Abstand gestapelt,
d) das Tafelpaket wird unter Beibehaltung der Tafelabstände in eine Presse eingeführt,
e) der Preßraum wird verschlossen ,
f) es werden heiße Gase oder Dämpfe in den Preßraum geleitet,
g) das Tafelpaket wird verdichtet und fertiggepreßt,
h) die Presse wird geöffnet und die fertige Platte entnommen.

Durch Anwendung des erfindungsgemäßen Verfahrens können dicke Platten oder Balken in guter Qualität wirtschaftlich hergestellt werden. Die beleimten großflächigen Tafeln werden von den heißen Gasen oder Dämpfen vollständig durchdrungen, so daß auch bei relativ kurzen Preßzeiten vollständige Verleimungen erzielt werden.

Es können auch Holzbretter verarbeitet werden. welche aus Holz geringerer Qualität bestehen oder hergestellt worden sind. Bei dem Holz geringerer Qualität kann es sich beispielsweise um sogenannte Seitenware handeln,.welche bei der Vollholzverarbeitung beim Sägen der Stämme in Balken oder Bretter anfällt. Als Seitenware werden Bretter geringer Dicke oder Breite bezeichnet.

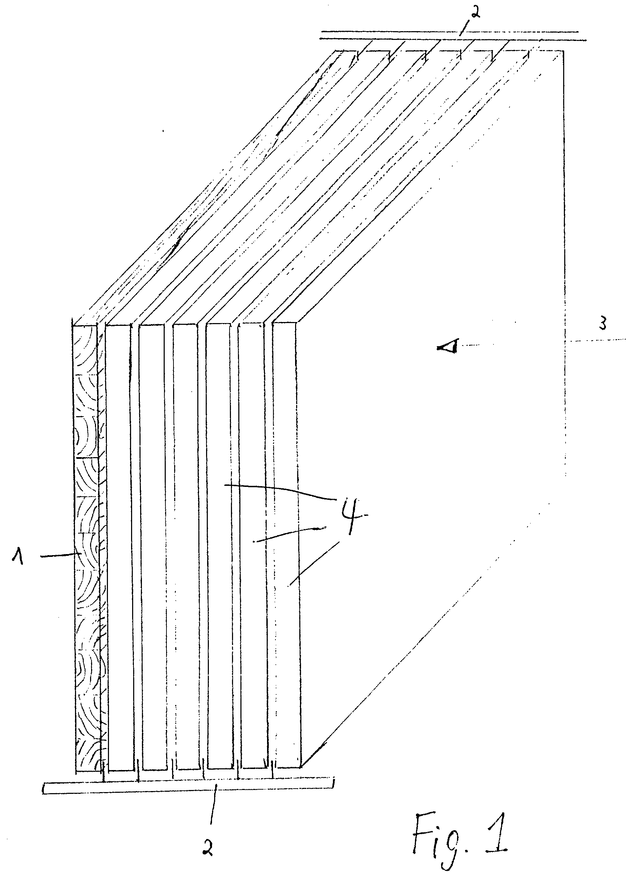

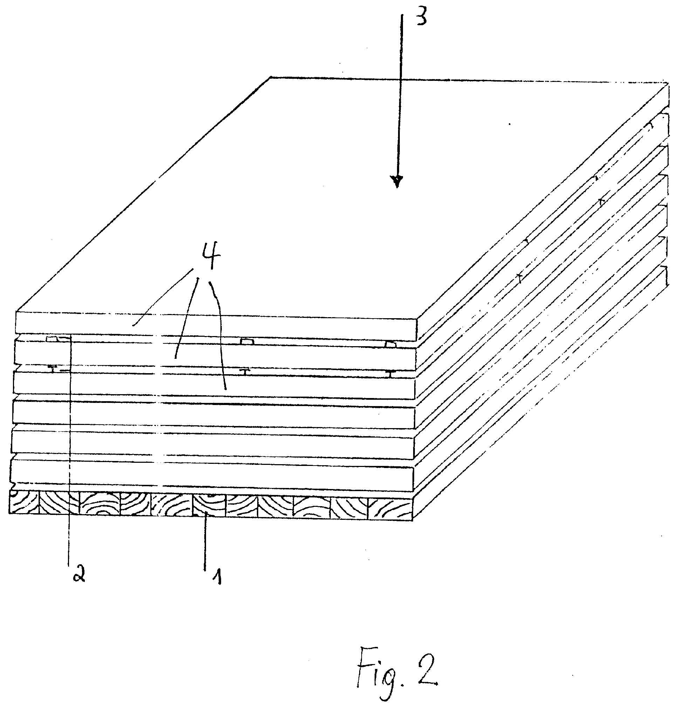

Ausführungsbeispiele der Erfindung sind nachstehend nahand der Figuren 1 und 2 erläutert. Es zeigen :
- Fig. 1: eine Anordnung aus einer Mehrzahl von Holzbrettern,aus welchen eine dicke Platte erzeugt wird und
- Fig. 2: eine andere Anordnung aus einer Mehrzahl von Holzbrettern.

In Fig.2 ist eine Mehrzahl von Tafeln 4 zu erkennen, welche in geringem Abstand von wenigen Millimetern voneinander angeordnet sind.In Fig. 1 sind die Tafeln 4 vertikal angeordnet. Wie bei der linken äußeren Tafel 4 angedeutet, kann die Tafel 4 aus meheren miteinander verleimten Leisten 1 bestehen. Die Abstandshalter 2 verdeutlichen, daß die beleimten Tafeln 4 vor dem Verpressen auf Abstand gehalten sind. Bei dem in Fig.1 gezeigten Ausführungsbeispiel soll die Verpressung der Tafeln 4 in horizontaler Richtung erfolgen, wie durch den Pfeil 3 verdeutlicht.
Bei dem in Fig. 2 gezeigten Ausführungsbeispiel sind die Tafeln 4 horizontal mit Abstand zueinander gestapelt. Bei den Distanzhaltern 2 kann es sich beispielsweise um Stifte, Klammern, Plättchen oder Kugeln handeln. Die Plättchen und Kugeln können beispielsweise aus Kunststoff bestehen. Es ist aber auch möglich, durch Durchstechen der Tafeln aus der Tafeloberfläche hochstehende Holzpartikel zu erzeugen, welche als Abstandshalter dienen Beim Verpressen werden diese Holzpartikel wieder in die Tafeloberfläche zurückgedrückt, so daß keine holzfremden Werkstoffe verwendet werden müssen.

## Patentansprüche

1. Verfahren zur Herstellung von dicken Platten oder Balken aus Holzbettern,**gekennzeichnet durch** folgende Verfahrensschritte:
a) aus den Holzbrettern werden großflächige Tafeln (4) hergestellt,
b) die Oberflächen der Tafeln (4) werden mit einer wärmehärtbaren Kunstharzzusammensetzung beleimt,
c) die beleimten Tafel (4) werden in geringem Abstand gestapelt,
d) das Tafelpaket wird unter Beibehaltung der Tafelabstände in eine Presse eingeführt,
e) der Preßraum wird verschlossen,
f) es werden heiße Gase oder Dämpfe in den Preßraum geleitet,
g) das Tafelpaket wird verdichtet und fertiggepreßt,
h) die Presse wird geöffnet und die fertige Platte entnommen.

2. Verfahren nach Anspruch 1, **dadurch gekennzeichnet, daß** nach dem Beleimen der Tafeln (4) auf den Oberflächen der Tafeln Distanzhalter (2) angeordnet werden.1
